# EUROPEAN PATENT APPLICATION

(11) **EP 4 319 313 A1**
(43) Date of publication of application: **07.02.2024**
(21) Application number: 22794803.1
(22) Date of filing: 24.04.2022
(51) Int. Cl.: H04W 40/22, H04W 4/06

(54) **DATA TRANSMISSION METHOD, RELATED DEVICE, AND READABLE STORAGE MEDIUM**

(30) Priority: 30.04.2021 CN 202110482605
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Murgitroyd & Company
(86) International application number: PCT/CN2022/088706
(87) International publication number: WO 2022/228332

(57) **Abstract**

This application discloses a data transmission method, a related device, and a readable storage medium, and belongs to the field of communication technologies. The data transmission method includes: performing, by a primary terminal, a first operation, where the first operation includes at least one of the following: receiving downlink information that is of a first object and that is sent by a network side device, and sending uplink information of the first object to the network side device, where the first object includes some or all of Q terminals, the Q terminals support jointly receiving data of a first service, the primary terminal is a primary terminal in the Q terminals, and Q is an integer greater than 1.

## Description

### CROSS-REFERENCE TO RELATED APPLICATION

This application claims priority to Chinese Patent Application No. 202110482605.9, filed on April 30, 2021 in China, which is incorporated herein by reference in its entirety.

### TECHNICAL FIELD

This application belongs to the field of communication technologies, and specifically relates to a data transmission method, a related device, and a readable storage medium.

### BACKGROUND

In an existing mechanism, each terminal separately establishes its own control plane connections and user plane connections with a core network/an access network, such as a non-access stratum (Non-Access Stratum, NAS) connection with a control plane of the core network, a radio resource control (Radio Resource Control, RRC) connection with a control plane of the access network, a protocol data unit (Protocol Data Unit, PDU) session (session) with a user plane of the core network, and a data radio bearer (Data Radio Bearer, DRB) or quality of service (Quality of Service, QoS) flow (flow) with a user plane of the access network. In other words, the control plane connections and the user plane connections of each terminal are independent of each other. Therefore, RRC connection maintenance and service transmission of each terminal are independent of each other.

According to the existing mechanism, if two terminals are expected to continuously transmit a common service, a user needs to set receiving and a receiving progress of the service on one of the terminals to achieve the effect of continuously receiving the same service by the two terminals. As a result, a plurality of terminals have low autonomy in jointly receiving a same service.

### SUMMARY

Embodiments of this application provide a data transmission method, a related device, and a readable storage medium, to resolve a problem in the prior art that a plurality of terminals have low autonomy in jointly receiving a same service.

According to a first aspect, a data transmission method is provided. The method includes:
performing, by a primary terminal, a first operation, where the first operation includes at least one of the following:
receiving downlink information that is of a first object and that is sent by a network side device; and
sending uplink information of the first object to the network side device, where
the first object includes some or all of Q terminals, the Q terminals support jointly receiving data of a first service, the primary terminal is a primary terminal in the Q terminals, and Q is an integer greater than 1.

According to a second aspect, a data transmission method is provided. The method includes:
performing, by a secondary terminal, a third operation, where the third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

According to a third aspect, a data transmission method is provided. The method includes:
performing, by a network side device, a fourth operation, where the fourth operation includes at least one of the following:
sending downlink information of a fourth object to a third object; and
receiving uplink information that is of the fourth object and that is sent by the third object, where
the third object includes a primary terminal in Q terminals, the Q terminals support jointly receiving data of a first service, the fourth object includes some or all of the Q terminals, and Q is an integer greater than 1.

According to a fourth aspect, a data transmission apparatus is provided, including:
a first performing module, configured to perform a first operation, where the first operation includes at least one of the following:
receiving downlink information that is of a first object and that is sent by a network side device; and
sending uplink information of the first object to the network side device, where
the first object includes some or all of Q terminals, the Q terminals support jointly receiving data of a first service, the primary terminal is a primary terminal in the Q terminals, and Q is an integer greater than 1.

According to a fifth aspect, a data transmission apparatus is provided, including:
a third performing module, configured to perform a third operation, where the third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

According to a sixth aspect, a data transmission apparatus is provided, including:
a fourth performing module, configured to perform a fourth operation, where the fourth operation includes at least one of the following:
sending downlink information of a fourth object to a third object; and
receiving uplink information that is of the fourth object and that is sent by the third object, where
the third object includes a primary terminal in Q terminals, the Q terminals support jointly receiving data of a first service, the fourth object includes some or all of the Q terminals, and Q is an integer greater than 1.

According to a seventh aspect, a communication device is provided. The communication device includes a processor, a memory, and a program or instructions stored in the memory and executable on the processor. When the program or the instructions are executed by the processor, steps of the method according to the first aspect, the second aspect, or the third aspect are implemented.

According to an eighth aspect, a communication device is provided, including a processor and a communication interface.

In a case that the communication device is a primary terminal, the communication interface is configured to:
perform a first operation, where the first operation includes at least one of the following:
receiving downlink information that is of a first object and that is sent by a network side device; and
sending uplink information of the first object to the network side device, where
the first object includes some or all of Q terminals, the Q terminals support jointly receiving data of a first service, the primary terminal is a primary terminal in the Q terminals, and Q is an integer greater than 1.

In a case that the communication device is a secondary terminal, the communication interface is configured to:
perform a third operation, where the third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

In a case that the communication device is a network side device, the communication interface is configured to:
perform a fourth operation, where the fourth operation includes at least one of the following:
sending downlink information of a fourth object to a third object; and
receiving uplink information that is of the fourth object and that is sent by the third object, where
the third object includes a primary terminal in Q terminals, the Q terminals support jointly receiving data of a first service, the fourth object includes some or all of the Q terminals, and Q is an integer greater than 1.

According to a ninth aspect, a readable storage medium is provided. The readable storage medium stores a program or instructions. When the program or the instructions are executed by a processor, steps of the method according to the first aspect, the second aspect, or the third aspect are implemented.

According to a tenth aspect, a chip is provided. The chip includes a processor and a communication interface, where the communication interface is coupled with the processor, and the processor is configured to run a program or instructions to implement the method according to the first aspect, the second aspect, or the third aspect.

According to an eleventh aspect, a computer program/program product is provided. The computer program/program product is stored in a non-volatile storage medium. The computer program/program product is executed by at least one processor to implement the method according to the first aspect, the second aspect, or the third aspect.

According to a twelfth aspect, a communication device is provided, configured to perform steps of the method according to the first aspect, steps of the method according to the second aspect, or steps of the method according to the third aspect.

In the embodiments of this application, information about Q terminals that support jointly receiving a first service may be transmitted independently, or information about secondary terminals in the Q terminals may be transmitted with the assistance of a primary terminal. It can be learned that a network side device may configure an aggregate bearer or independent bearers for the Q terminals, so that the Q terminals can jointly receive a same service under the control of the network side device. Therefore, autonomy of the Q terminals in jointly receiving the same service can be improved, thereby improving service experience and system efficiency.

### BRIEF DESCRIPTION OF DRAWINGS

FIG. 1 is a schematic diagram of a wireless communication system according to an embodiment of this application;
FIG. 2 is a first flowchart of a data transmission method according to an embodiment of this application;
FIG. 3 is a second flowchart of a data transmission method according to an embodiment of this application;
FIG. 4 is a third flowchart of a data transmission method according to an embodiment of this application;
FIG. 5 is a first structural diagram of a data transmission apparatus according to an embodiment of this application;
FIG. 6 is a second structural diagram of a data transmission apparatus according to an embodiment of this application;
FIG. 7 is a third structural diagram of a data transmission apparatus according to an embodiment of this application;
FIG. 8 is a structural diagram of a communication device according to an embodiment of this application;
FIG. 9 is a structural diagram of a terminal according to an embodiment of this application; and
FIG. 10 is a structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the quantity of objects is not limited. For example, there may be one or more first objects. In addition, in this specification and the claims, "and/or" represents at least one of connected objects, and a character "/" generally represents an "or" relationship between associated objects.

It should be noted that the technology described in the embodiments of this application is not limited to a long term evolution (Long Time Evolution, LTE)/LTE-advanced (LTE-Advanced, LTE-A) system, and may also be used in various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for illustrative purposes, and NR terms are used in most of the following descriptions, but these technologies can also be applied to an application other than an NR system application, for example, a 6-th generation (6-th Generation, 6G) communication system.

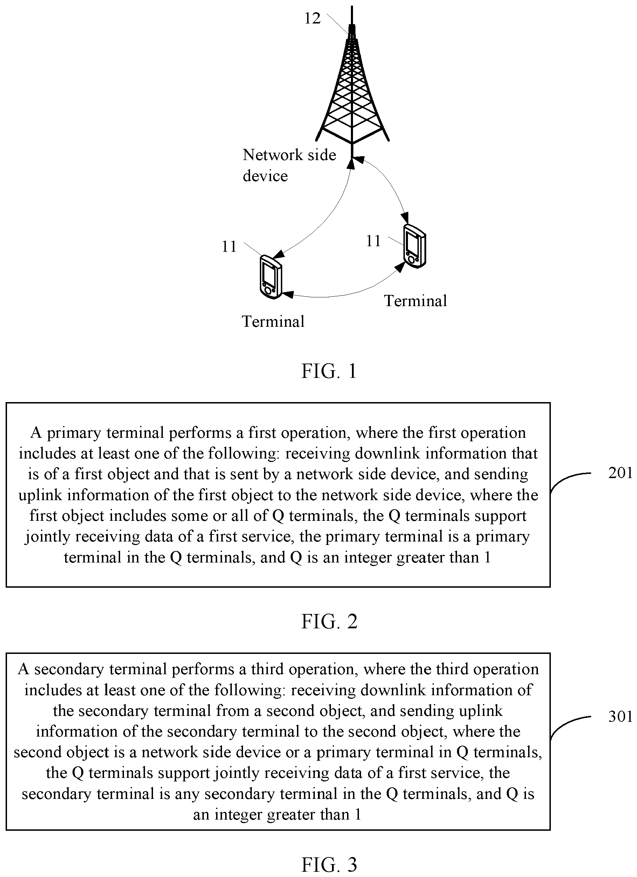

FIG. 1 is a schematic diagram of a wireless communication system according to an embodiment of this application. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes a smartwatch, a band, a headset, eyeglasses, or the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (evolved Node B, eNB), a home Node B, a home evolved Node B, a wireless local area network (wireless local area network, WLAN) access point, a WiFi node, a transmitting receiving point (Transmitting Receiving Point, TRP), or another specific appropriate term in the art. The base station is not limited to specific technical vocabulary, provided that the same technical effects are achieved. It should be noted that in the embodiments of this application, a base station in the NR system is merely used as an example, but does not limit a specific type of the base station.

With reference to the accompanying drawings, the embodiments of this application are described below in detail by using some embodiments and application scenarios thereof.

FIG. 2 is a flowchart of a data transmission method according to an embodiment of this application. The data transmission method in FIG. 2 may be performed by a primary terminal. As shown in FIG. 2, the following steps may be included.

Step 201: The primary terminal performs a first operation.

The primary terminal is a primary terminal in Q terminals, and Q is an integer greater than 1. The Q terminals may include one primary terminal and Q-1 secondary terminals. The primary terminal in the Q terminals may be determined based on at least one of the following: an order of accessing to a network, capabilities of the terminals, and link qualities of the terminals. During actual application, the primary terminal in the Q terminals may be changed. For example, in a case that the primary terminal is determined based on the link qualities of the terminals, it is assumed that the Q terminals include UE1 and UE2. At a first time point, the link quality of UE1 is higher than the link quality of UE2. Therefore, UE1 may be determined as the primary terminal at this time. At a second time point, if the link quality of UE2 becomes better, and the link quality of UE2 is higher than the link quality of UE1, UE2 may be determined as the primary terminal at this time.

In this embodiment of this application, the Q terminals may support jointly receiving data of a first service, that is, the Q terminals may support jointly receiving data of a same service. In this embodiment of this application, it may be considered that, the Q terminals that support jointly receiving the data of the same service have an association relationship.

That the Q terminals support jointly receiving the data of the first service may be specifically represented as any one of the following:
Types of data that is of the first service and that is received by the Q terminals are different, that is, different types of data of the first service are transmitted to different terminals respectively. For example, different data flows are transmitted to different terminals. The data flows may be distinguished by using QoS flows. Data having the same QoS requirement or similar QoS requirements may be mapped onto a same QoS flow. Implementation may be as follows: Different data flows of the first service are transmitted to radio bearers (Radio Bearer, RB) corresponding to different terminals. For example, a user may use UE1 to receive data flows 1 and 2 of the first service, and use UE2 at the same time to receive data flows 3 and 4 of the first service.

Types of data that is of the first service and that is received by the Q terminals are the same, that is, a same type of data of the first service is split or copied to be transmitted to different terminals. For example, a same data flow is transmitted to different terminals. Implementation may be as follows: Data of a same RB corresponding to the first service is split or copied to be transmitted to different terminals. For example, the user may use UE1 and UE2 at the same time to receive the data flows 1 and 2 of the first service, and data that is of the first service and that is received by UE1 is the same as or different from data that is of the first service and that is received by UE2. If they are the same, duplication detection and deletion may be performed on the data. If they are different, an ordering operation may be performed on the received data.

During specific implementation, the first operation may include at least one of the following:
receiving downlink information that is of a first object and that is sent by a network side device; and
sending uplink information of the first object to the network side device, where the first object includes some or all of the Q terminals.

In this embodiment of this application, the following cases may be included:
Case 1: The primary terminal supports transmitting only its own information (the information may include at least one of uplink information and downlink information).
Case 2: The primary terminal supports transmitting at least information about the first object. In some embodiments, the primary terminal may support transmitting information about the Q terminals.

It should be noted that, in this embodiment of this application, that the primary terminal supports transmitting information about a terminal does not indicate that the information about the terminal is certainly transmitted through the primary terminal. For example, it is assumed that the primary terminal supports transmitting information about a secondary terminal a. In a case that the secondary terminal a has not established an RRC connection with the network side device, the information about the secondary terminal a may be transmitted by the primary terminal by procuration (that is, configuration information or reporting information of the secondary terminal is carried in signaling of the primary terminal, and the secondary terminal does not have its own signaling process). In a case that the secondary terminal a has established an RRC connection with the network side device, the information about the secondary terminal a may be directly transmitted through a communication interface between the secondary terminal a and the network side device, or may be transited by the primary terminal (or referred to as relayed or passed on by the primary terminal, or transmitted with the assistance of the primary terminal). In addition, information about the primary terminal may alternatively be transited by another secondary terminal that has established an RRC connection with the network side device. This may be specifically determined according to an actual situation, and is not limited in this embodiment of this application.

For case 1, a communication interface between the primary terminal and the network side device is used to transmit only the information about the primary terminal, and the first object is the primary terminal. Information about each terminal in the Q terminals may be transmitted through an interface between the terminal and the network side device, that is, the information about the Q terminals may be transmitted independently.

For case 2, a communication interface between the primary terminal and the network side device may transmit information about some or all of the Q terminals, and the first object may include at least one of the Q terminals. In this case, information about a secondary terminal in the Q terminals may be transmitted through a path between the secondary terminal and the primary terminal as well as a path between the primary terminal and the network side device, that is, the information about the secondary terminal may be transited by the primary terminal or transmitted by the primary terminal by procuration. Certainly, it may be understood that the information about the secondary terminal in the Q terminals may alternatively be transmitted through a communication interface between the terminal and the network side device. This may be specifically determined according to an actual situation, and is not limited in this embodiment of this application.

Optionally, the Q terminals include at least one secondary terminal, and the method may further include:
performing, by the primary terminal, a second operation, where the second operation includes at least one of the following:
after receiving first downlink information of a first terminal, sending the first downlink information to the first terminal, where the first terminal is any secondary terminal in the first object; and
before sending first uplink information of a second terminal, receiving the first uplink information sent by the second terminal, where the second terminal is any secondary terminal in the first object.

During specific implementation, downlink information of a secondary terminal may be sent by the network side device to the primary terminal through the communication interface between the primary terminal and the network side device, and then sent by the primary terminal to the secondary terminal through a communication interface between the terminals.

Uplink information of the secondary terminal may be sent by the secondary terminal to the primary terminal through the communication interface between the terminals, and then sent by the primary terminal to the network side device through the communication interface between the primary terminal and the network side device.

It should be noted that, in a case that the first object includes at least two terminals, information about the terminals in the first object may be transmitted together or independently between the primary terminal and the network side device. This may be specifically determined according to an actual situation, and is not limited in this embodiment of this application.

According to the data transmission method in this embodiment, a primary terminal may transmit only its own information, and may also transmit information about Q terminals that support jointly receiving a first service. It can be learned that a network side device may configure an aggregate bearer or independent bearers for the Q terminals, so that the Q terminals can jointly receive a same service under the control of the network side device. Therefore, autonomy of the Q terminals in jointly receiving the same service can be improved, thereby improving service experience and system efficiency.

In this embodiment of this application, optionally, the downlink information may include but is not limited to at least one of the following: a timing advance (Timing Advance, TA), a cell-radio network temporary identifier (Cell-Radio Network Temporary Identifier, C-RNTI), and resource scheduling information. Further, the resource scheduling information may include at least one of the following: dynamic resource scheduling information and semi-static resource scheduling information.

Optionally, the uplink information may include but is not limited to at least one of the following: control information of a physical layer, control information of a media access control (Media Access Control, MAC) layer, and feedback information of a hybrid automatic repeat request (Hybrid Automatic Repeat Request, HARQ). Further, the control information of the MAC layer may include at least one of the following: an MAC control element (Control Element, CE), a buffer status report (Buffer Status Report, BSR), a power headroom report (Power Headroom Report, PHR), and a recommended bit rate (Recommended Bit Rate).

In this embodiment of this application, for a control-information timer such as a BSR retransmission timer or a BSR periodical timer, a timer of each terminal may be respectively maintained based on each piece of UE, that is, each piece of UE maintains its own timer. Alternatively, the timers of all the terminals may be maintained by the primary terminal in a unified manner.

Manners for transmitting different pieces of information may be different. Specific descriptions are as follows.

### 1. The downlink information includes a TA.

In this case, the network side device may send the downlink information through a contention-based random access procedure, or send the downlink information through a contention-free random access procedure. In other words, the secondary terminal may obtain its own TA through the contention-based random access procedure, or may obtain its own TA through the contention-free random access procedure.

Further, the downlink information may further include a C-RNTI, that is, the C-RNTI may also be sent through a random access procedure. Certainly, in some embodiments, the C-RNTI may alternatively be sent through dedicated signaling.

In a case that the downlink information of the secondary terminal is sent through the contention-based random access procedure, after establishing an RRC connection with the network side device, the secondary terminal may send identifier information of the primary terminal to the network side device through the communication interface between the secondary terminal and the network side device. Therefore, the network side device may know an association relationship between the primary terminal and the secondary terminal, thereby constructing a first architecture that is used for joint transmission of the Q terminals.

The first architecture in this embodiment of this application may be understood as an architecture that is similar to an inverted dual connectivity (Dual Connectivity, DC) architecture. This is because a DC architecture is used for data transmission between one terminal and two network side devices, but the first architecture is used for data transmission between Q terminals and one network side device. In addition, because the first architecture includes a plurality of terminals and is used for joint transmission of the plurality of terminals, the first architecture may also be referred to as a multi-UE architecture or an architecture used for joint transmission of a plurality of pieces of UE.

In a case that the downlink information of the secondary terminal is sent through the contention-free random access procedure, the method may further include:
after establishing an RRC connection with the network side device, receiving, by the primary terminal, first information sent by the network side device, where the first information includes a dedicated random access resource of a third terminal; and
sending, by the primary terminal, the first information to the third terminal, where
the third terminal includes at least one secondary terminal in the Q terminals.

In this implementation, after establishing an RRC connection with the primary terminal, the network side device may send at least one dedicated random access resource to the primary terminal. The primary terminal may send the at least one dedicated random access resource to the secondary terminal. At least one secondary terminal in the Q terminals may use the dedicated random access resource allocated by the network side device to initiate a contention-free random access procedure, thereby obtaining a TA. In this case, because the secondary terminal initiates, by using the dedicated random access resource allocated by the network side device, the contention-free random access procedure to obtain the TA, the network side device may know an association relationship between the primary terminal and the secondary terminal, thereby constructing a first architecture that is used for joint transmission of the Q terminals.

Further, when sending the dedicated random access resource, the network side device may also send a C-RNTI together. Therefore, the secondary terminal may receive the dedicated random access resource and the C-RNTI through one piece of information.

It should be noted that, in this embodiment of this application, different terminals may use a same TA and/or C-RNTI. For example, it is assumed that the Q terminals include UE1 and UE2, that UE1 is a primary terminal, that UE2 is a secondary terminal, and that a distance between UE1 and UE2 is relatively short. It may be considered that TAs of the two terminals are consistent with each other, that UE2 can directly use TA of UE1, that UE2 does not need any RACH, and that the network side device can directly establish a dual-UE architecture.

### 2. The downlink information includes resource scheduling information.

In this case, resource scheduling information of each terminal may be transmitted independently, or may be transmitted through the primary terminal. In other words, the resource scheduling information of each terminal may be applicable to the foregoing case 1, and may also be applicable to the foregoing case 2.

In a case that the resource scheduling information of each terminal is transmitted through the primary terminal, optionally, resource scheduling information of each terminal in the first object is determined in any one of the following manners: being indicated by the downlink information, being allocated by the primary terminal, and being negotiated by the first object.

In a scenario in which the resource scheduling information of each terminal in the first object is indicated by the downlink information, the network side device may carry, in the downlink information, the resource scheduling information of each terminal as well as identifier information of a terminal corresponding to each piece of the resource scheduling information. Therefore, after receiving the downlink information, the primary terminal may know the resource scheduling information of each terminal, and forward the resource scheduling information of each secondary terminal to the secondary terminal.

In a case that the resource scheduling information of each terminal in the first object is allocated by the primary terminal, the network side device allocates only the resource scheduling information of the Q terminals, but does not indicate corresponding resource scheduling information of each terminal. After receiving the downlink information, the primary terminal may determine the resource scheduling information of each terminal by itself, and forward the resource scheduling information of each secondary terminal to the secondary terminal.

In a case that the resource scheduling information of each terminal in the first object is negotiated by the first object, the network side device allocates only the resource scheduling information of the Q terminals, but does not indicate corresponding resource scheduling information of each terminal. After receiving the downlink information, the primary terminal may forward the downlink information to each terminal, and each terminal determines its corresponding resource scheduling information by itself via negotiation.

It should be noted that, the foregoing implementation may be applicable to dynamic resource scheduling information and/or semi-static resource scheduling information.

Considering that dynamic resource scheduling information has a high requirement for timeliness, dynamic resource scheduling information of each terminal may be transmitted independently.

Considering allocation and activation of semi-static resources, semi-static resource scheduling information may be classified into two types. Type 1: RRC signaling directly indicates information about a time-frequency resource position, a cycle, and the like; and UE can directly use the information without any activation. Type 2: RRC signaling indicates only information about a cycle, and information about a time-frequency resource position needs to be scheduled or activated by further monitoring a physical downlink control channel (Physical Downlink Control Channel, PDCCH).

For type 1, semi-static resource scheduling information of each terminal may be transmitted independently, or may be transmitted through the primary terminal.

For type 2, information about a cycle of each terminal may be transmitted independently or transmitted through the primary terminal; and information about a time-frequency resource position of each terminal may be transmitted independently, to improve an activation rate of a semi-static resource.

In this embodiment of this application, a terminal may transfer a semi-static resource to another terminal temporarily.

Optionally, in a case that the downlink information includes resource scheduling information and that the resource scheduling information is semi-static resource scheduling information, after the primary terminal performs the first operation, the method further includes:
receiving, by the primary terminal, third information sent by a fifth terminal, where the third information indicates that a first semi-static resource of the fifth terminal is in an idle state; and
transmitting, by the primary terminal, fourth information through the first semi-static resource, where the fourth information includes identifier information of the primary terminal as well as data of the primary terminal;
wherein the fifth terminal is any secondary terminal in the Q terminals.

In this implementation, the fifth terminal does not have any data to be received or sent on its own first semi-static resource, and may transfer the first semi-static resource to another terminal through interaction between the fifth terminal and the another terminal, so that the another terminal can use the first semi-static resource. This can improve utilization of the resource.

During specific implementation, transmission of the fourth information may be specifically represented as at least one of the following: sending information about the primary terminal, and receiving the information about the primary terminal. To help a receiver of the fourth information know information that indicates a terminal to which the fourth information specifically belongs, identifier information of the terminal may be carried in the fourth information.

Optionally, in a case that the downlink information includes resource scheduling information and that the resource scheduling information is semi-static resource scheduling information, after the primary terminal performs the first operation, the method further includes:
sending, by the primary terminal, fifth information to a sixth terminal, where the fifth information indicates that a second semi-static resource of the primary terminal is in an idle state; and
the sixth terminal includes at least one secondary terminal in the Q terminals.

In this implementation, the primary terminal does not have any data to be received or sent on its own second semi-static resource, and may transfer the second semi-static resource to another terminal through interaction between the primary terminal and the another terminal, so that the another terminal can use the second semi-static resource. This can improve utilization of the resource.

In this embodiment of this application, in a first implementation, the network side device may allocate Q first uplink dedicated resources to the Q terminals, where the Q first uplink dedicated resources are in a one-to-one correspondence with the Q terminals. In other words, the network side device allocates, to each terminal, an independent uplink dedicated resource that is used to report uplink information.

In this implementation, uplink information of each terminal may be transmitted independently; and uplink information of a secondary terminal may be sent by the secondary terminal to the network side device through an uplink dedicated resource corresponding to the secondary terminal. The first object is some or all of the Q terminals.

In a second implementation, the network side device may allocate a second uplink dedicated resource to the primary terminal in the Q terminals, where the second uplink dedicated resource corresponds to the Q terminals. In other words, the network side device may allocate all uplink dedicated resources of the Q terminals to the primary terminal; and the primary terminal assists a secondary terminal in reporting uplink information of the secondary terminal.

In this implementation, the uplink information of the secondary terminal may be transited by the primary terminal or transmitted by the primary terminal by procuration; and after being sent to the primary terminal, the uplink information of the secondary terminal is sent by the primary terminal to the network side device through an uplink dedicated resource corresponding to the primary terminal. The first object is the primary terminal.

During implementation, an uplink dedicated resource may include at least one of the following: an uplink dedicated-scheduling request (Dedicated-Scheduling Request, D-SR) resource, and a physical uplink control channel (Physical Uplink Control Channel, PUCCH) resource.

Optionally, the sending uplink information of the first object to the network side device includes any one of the following:
(1) sending, by the primary terminal at a first time-frequency resource position, uplink information of a fourth terminal to the network side device, where the first time-frequency resource position corresponds to the fourth terminal, and the fourth terminal is any terminal in the first object; and
(2) sending, by the primary terminal, second information to the network side device, where the second information includes at least one piece of uplink information as well as identifier information of a terminal corresponding to the at least one piece of uplink information.

In this implementation, the primary terminal may transmit information about a secondary terminal. The primary terminal may send the information about the secondary terminal in manner (1) or manner (2), to help the network side device distinguish information about each terminal. Therefore, effectiveness of information transmission is improved. It should be understood that for downlink information, when sending downlink information of each terminal, the network side device may also send the downlink information in a manner that is the same as a manner of sending the uplink information, to help the primary terminal distinguish information about each terminal. Therefore, effectiveness of information transmission is improved.

In manner (1), for time domain resource positions, different time domain resource positions may be divided for different terminals, and information about each terminal may be transmitted at its own corresponding time domain resource position. Therefore, the network side device or the primary terminal may determine, based on a time domain resource position corresponding to received information, a terminal to which the received information belongs.

In manner (2), signaling that carries information about a terminal also carries identifier information of the terminal. Therefore, after receiving signaling, the network side device or the primary terminal may determine, based on the identifier information that is of a terminal and that is carried in the signaling, the terminal to which information in the signaling belongs.

It should be noted that, in manner (2), information about a plurality of terminals may be sent in a cascade, or may be sent independently. This may be specifically determined according to an actual situation, and is not limited in this embodiment of this application.

FIG. 3 is a flowchart of a data transmission method according to an embodiment of this application. The data transmission method in FIG. 3 may be performed by a secondary terminal. As shown in FIG. 3, the data transmission method may include the following steps:
Step 301: The secondary terminal performs a third operation.

The third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

In a case that the second object is the network side device, information about each terminal is transmitted independently; and the information about each terminal may be transmitted through an interface between the terminal and the network side device.

In a case that the second object is the primary terminal, the information about each terminal may be transmitted through the primary terminal; and information about the secondary terminal is transited by the primary terminal or transmitted by the primary terminal by procuration, that is, the information about the secondary terminal is transmitted through a path between the secondary terminal and the primary terminal as well as a path between the primary terminal and the network side device.

According to the data transmission method in this embodiment, the information about the secondary terminal may be transmitted by the secondary terminal itself, or may be transited by the primary terminal or transmitted by the primary terminal by procuration. It can be learned that a network side device may configure an aggregate bearer or independent bearers for the Q terminals, so that the Q terminals can jointly receive a same service under the control of the network side device. Therefore, autonomy of the Q terminals in jointly receiving the same service can be improved, thereby improving service experience and system efficiency.

Optionally, the downlink information includes at least one of the following: a TA, a C-RNTI, and resource scheduling information; or the uplink information includes at least one of the following: control information of a physical layer, control information of a MAC layer, and feedback information of a HARQ.

Optionally, in a case that the downlink information includes a TA, the downlink information of the secondary terminal is obtained through a contention-based random access procedure, or the downlink information of the secondary terminal is obtained through a contention-free random access procedure.

Optionally, the downlink information further includes a C-RNTI.

Optionally, in a case that the downlink information of the secondary terminal is obtained through the contention-based random access procedure, the method further includes:
after establishing an RRC connection with the network side device, sending, by the secondary terminal, sixth information to the network side device, where the sixth information includes identifier information of the primary terminal.

Optionally, in a case that the downlink information of the secondary terminal is obtained through the contention-free random access procedure, the receiving downlink information of the secondary terminal from a second object includes:
receiving, by the secondary terminal, first information sent by the primary terminal, where the first information includes a dedicated random access resource of the secondary terminal; and
initiating, by the secondary terminal, the contention-free random access procedure by using the dedicated random access resource, where the contention-free random access procedure is used to obtain the TA.

Optionally, the first information further includes a C-RNTI of the secondary terminal.

Optionally, the uplink information of the secondary terminal is sent by the secondary terminal to the network side device through an uplink dedicated resource corresponding to the secondary terminal; or
the uplink information of the secondary terminal is sent by the primary terminal to the network side device through an uplink dedicated resource corresponding to the primary terminal.

Optionally, the uplink information of the secondary terminal is sent at a time domain resource position corresponding to the secondary terminal; or
the uplink information of the secondary terminal is carried in second information, where the second information includes the uplink information of the secondary terminal as well as identifier information of the secondary terminal.

Optionally, in a case that the downlink information includes resource scheduling information, the second object is the network side device or the primary terminal.

Optionally, in a case that the second object is the primary terminal, resource scheduling information of the secondary terminal is determined in any one of the following manners: being indicated by the downlink information, being allocated by the primary terminal, and being negotiated by some or all of the Q terminals.

Optionally, in a case that the downlink information includes resource scheduling information and that the resource scheduling information is semi-static resource scheduling information, after the secondary terminal performs the third operation, the method further includes:
receiving, by the secondary terminal, seventh information sent by a seventh terminal, where the seventh information indicates that a third semi-static resource of the first secondary terminal is in an idle state; and
transmitting, by the secondary terminal, the seventh information through the third semi-static resource, where the seventh information includes identifier information of the secondary terminal as well as data of the secondary terminal;
wherein the seventh terminal is any terminal in the Q terminals other than the secondary terminal.

In this implementation, when a semi-static resource of another secondary terminal or the primary terminal is in an idle state, the secondary terminal may use the semi-static resource of the another secondary terminal or the primary terminal to receive and send data, so that resource utilization can be improved.

Optionally, in a case that the downlink information includes resource scheduling information and that the resource scheduling information is semi-static resource scheduling information, after the secondary terminal performs the third operation, the method further includes:
sending, by the secondary terminal, eighth information to an eighth terminal, where the eighth information indicates that a fourth semi-static resource of the secondary terminal is in an idle state, and the eighth terminal is any terminal in the Q terminals other than the secondary terminal.

In this implementation, the secondary terminal may transfer its own idle semi-static resource to another secondary terminal or the primary terminal for reception and sending of data, so that resource utilization can be improved.

It should be noted that this embodiment is an embodiment of the secondary terminal corresponding to the method embodiment in FIG. 2. Therefore, reference may be made to the related description in the method embodiment shown in FIG. 2, and a same beneficial effect is achieved. To avoid repetition of description, details are not described herein again.

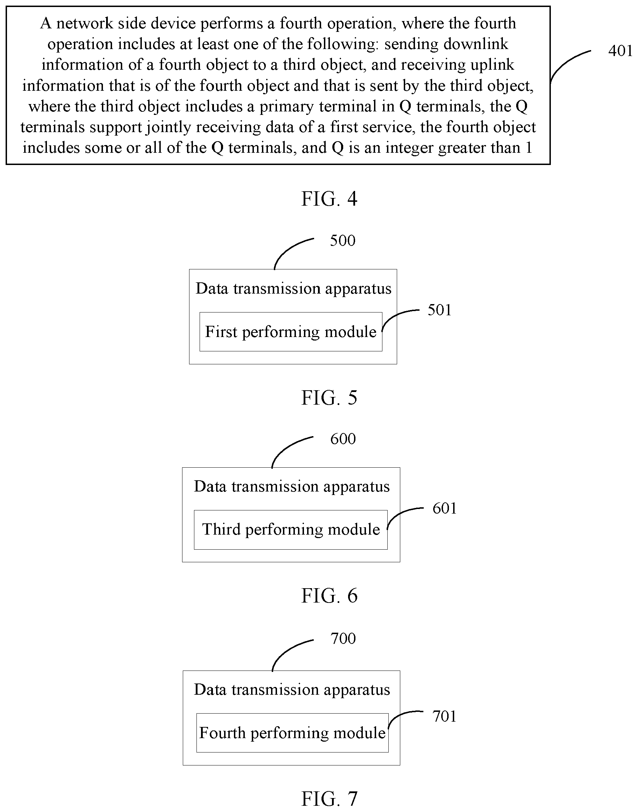

FIG. 4 is a flowchart of a data transmission method according to an embodiment of this application. The data transmission method in FIG. 4 may be performed by a network side device. As shown in FIG. 4, the data transmission method may include the following steps:

Step 401: The network side device performs a fourth operation.

The fourth operation includes at least one of the following:
sending downlink information of a fourth object to a third object; and
receiving uplink information that is of the fourth object and that is sent by the third object, where
the third object includes a primary terminal in Q terminals, the Q terminals support jointly receiving data of a first service, the fourth object includes some or all of the Q terminals, and Q is an integer greater than 1.

During specific implementation, the third object and the fourth object may be a same object, that is, a terminal included in the third object is the same as that included in the fourth object; or the third object and the fourth object may be different objects, that is, the third object differs from the fourth object in at least one terminal.

In a case that the third object and the fourth object are a same object, information about each terminal is transmitted independently; and the information about each terminal may be transmitted through an interface between the terminal and the network side device. It should be noted that, in a case that the fourth object includes two or more terminals, information about the terminals in the fourth object may be sent simultaneously or successively.

In a case that the third object is the primary terminal and that the fourth object includes some or all of the Q terminals, the information about each terminal may be transmitted through the primary terminal; and information about the secondary terminal is transited by the primary terminal or transmitted by the primary terminal by procuration, that is, the information about the secondary terminal is transmitted through a path between the secondary terminal and the primary terminal as well as a path between the primary terminal and the network side device.

According to the data transmission method in this embodiment, the information about each terminal may be sent independently, or may be sent through the primary terminal. It can be learned that a network side device may configure an aggregate bearer or independent bearers for the Q terminals, so that the Q terminals can jointly receive a same service under the control of the network side device. Therefore, autonomy of the Q terminals in jointly receiving the same service can be improved, thereby improving service experience and system efficiency.

Optionally, the downlink information includes at least one of the following: a TA, a C-RNTI, and resource scheduling information; or the uplink information includes at least one of the following: control information of a physical layer, control information of a MAC layer, and feedback information of a HARQ.

Optionally, in a case that the downlink information includes a TA, the downlink information of the fourth object meets at least one of the following:
that downlink information of a ninth terminal is sent through a contention-based random access procedure, where the ninth terminal includes at least one secondary terminal in the fourth object; and
that downlink information of a tenth terminal is sent through a contention-free random access procedure, where the tenth terminal includes at least one secondary terminal in the fourth object.

Optionally, the downlink information further includes a C-RNTI.

Optionally, in a case that the downlink information of the ninth terminal is sent through the contention-based random access procedure, the method further includes:
after establishing an RRC connection with the ninth terminal, receiving, by the network side device, sixth information sent by the ninth terminal, where the sixth information includes identifier information of the primary terminal; and
establishing, by the network side device, a first architecture based on the sixth information, where the first architecture includes the primary terminal and the ninth terminal.

Optionally, in a case that the downlink information of the tenth terminal is sent through the contention-free random access procedure, the method further includes at least one of the following:
after establishing an RRC connection with the primary terminal, sending, by the network side device, first information to the primary terminal, where the first information includes a dedicated random access resource of the tenth terminal; and
after establishing an RRC connection with the tenth terminal, establishing, by the network side device, a first architecture, where the first architecture includes the primary terminal and the tenth terminal.

Optionally, the first information further includes a C-RNTI of the tenth terminal.

Optionally, before the network side device performs the fourth operation, the method further includes any one of the following:
allocating, by the network side device, Q first uplink dedicated resources to the Q terminals, where the Q first uplink dedicated resources are in a one-to-one correspondence with the Q terminals; and
allocating, by the network side device, a second uplink dedicated resource to the primary terminal in the Q terminals, where the second uplink dedicated resource corresponds to the Q terminals.

Optionally, in a case that the third object is the primary terminal, the receiving uplink information that is of the fourth object and that is sent by the third object includes any one of the following:
receiving, by the network side device at a second time-frequency resource position, uplink information that is of the fourth object and that is sent by the primary terminal, where the second time-frequency resource position corresponds to the fourth object; and
receiving, by the network side device, second information sent by the primary terminal, where the second information includes at least one piece of uplink information as well as identifier information of a terminal corresponding to the at least one piece of uplink information.

Optionally, in a case that the downlink information includes resource scheduling information and that the resource scheduling information is semi-static resource scheduling information, after the network side device performs the fourth operation, the method further includes:
receiving, by the network side device, ninth information through a fifth semi-static resource, where the ninth information includes identifier information of an eleventh terminal as well as data of the eleventh terminal; and
the fifth semi-static resource is a semi-static resource allocated to a fifth terminal, the fifth terminal is any terminal in the Q terminals other than the eleventh terminal, and the eleventh terminal is any terminal in the Q terminals.

It should be noted that this embodiment is an embodiment of the network side device corresponding to the foregoing method embodiment in FIG. 2. Therefore, reference may be made to the related description in the method embodiment shown in FIG. 2, and a same beneficial effect is achieved. To avoid repetition of description, details are not described herein again.

In this embodiment of this application, an X^{th} terminal (for example, the first terminal to the eleventh terminal) may be any terminal in the Q terminals. During actual application, different X^{th} secondary terminals may be a same secondary terminal, or may be different secondary terminals. This may be specifically determined according to an actual situation, and is not limited in this embodiment of this application.

The plurality of optional implementations described in this embodiment of this application may be implemented in combination with each other or may be implemented separately. This is not limited in this embodiment of this application.

For ease of understanding, example descriptions are as follows:

This application mainly resolves a problem of how to perform joint transmission of a service on two or more devices. A solution may include the following content:

An obtaining manner of a TA and/or a C-RNTI of second UE: The second UE may initiate a normal contention-based random access procedure to a network, to obtain the TA and the C-RNTI; and the second UE or first UE reports or requests for an association between the two pieces of UE; or the first UE may obtain a dedicated random access resource and/or a second C-RNTI through the network; and the second UE may use a dedicated random access procedure in the network, to obtain the TA.

For the two pieces of UE, different C-RNTIs are used in physical-layer transmission respectively for scheduling, and HARQ feedback is also performed respectively and independently based on an existing HARQ feedback mechanism. If a resource is a semi-static resource, during configuration, the resource may be configured for specific UE or appointed to specific UE for use.

Uplink transmission of control information of physical layers or MAC layers of the two pieces of UE may be performed by the first UE, and different UE identifiers (Identifier, ID) are used for differentiation; or the uplink transmission of the control information is respectively performed by the two pieces of UE.

Descriptions are provided below with reference to embodiments.

### Embodiment 1: Obtaining of a TA

A TA is information that each piece of UE having a data transmission requirement needs to obtain, to perform uplink synchronous sending, for example, uplink HARQ feedback of uplink data or downlink data. A purpose of uplink synchronous sending is to ensure that signals of different pieces of UE reach a base station synchronously. Therefore, orthogonality is satisfied better, and a success rate of reception is improved.

For an architecture in which two pieces of UE jointly receive same data or related data, a base station needs to establish an architecture similar to an inverted DC (Dual Connectivity) architecture for the two pieces of UE. Why the architecture is similar to the inverted DC architecture is because in a conventional DC, one piece of UE is connected to two gNBs for data transmission, but a requirement of this application is that two pieces of UE are connected to one gNB at the same time for data split (split) transmission. The data split transmission may be transmission of data of different radio bearers (Radio Bearer, RB) on different pieces of UE respectively, or may be transmission of data of a same RB on two pieces of UE via splitting/copying.

Because the two pieces of UE are at different distances from the gNB, the two pieces of UE need to maintain their own TAs and/or C-RNTIs respectively. One piece of UE which accesses to a network first is referred to as primary UE or first UE. This UE establishes an RRC connection to the network first according to an existing process, and obtains information about its TA or information about its TA and C-RNTI through an existing contention-based random access procedure. The other piece of UE which accesses to the network second is referred to as secondary UE or second UE. This UE obtains its TA or its TA and C-RNTI in the following two manners:
Manner 1: The second UE also initiates an access procedure to the network independently, uses the existing contention-based random access procedure to obtain information about the TA or information about the TA and the C-RNTI, and carries an association relationship between the second UE and the first UE in RRC signaling, so that the gNB can configure a separate (separate) DRB or split DRB architecture subsequently for the two pieces of UE that are in a connected state.
Manner 2: In a process of performing RRC signaling interaction with the gNB, the first UE sends a request for establishment of a multi-UE architecture. After accepting the request, the gNB sends a dedicated random access resource or the dedicated random access resource and a second C-RNTI to the first UE. The dedicated random access resource may be, for example, a dedicated preamble code or a dedicated time-frequency resource position. The first UE forwards information about the dedicated random access resource to the second UE through an interface between the two pieces of UE. The second UE initiates a contention-free random access procedure to the network by using the dedicated random access resource, thereby obtaining the information about the TA or the information about the TA and the C-RNTI.

In the foregoing two manners, usage of the C-RNTIs and the TAs that are of the pieces of UE and that are used between the gNB and the two pieces of UE in the multi-UE architecture and an association relationship therebetween are established. Subsequently, the information may be used for data transmission of the multi-UE architecture.

It should be noted that, in this embodiment, the two pieces of UE are used as an example, but a similar method may also be applicable to a case in which there are more pieces of UE. In other words, when there are two or more pieces of second UE, the pieces of second UE may also respectively perform contention-based random access to the network independently to obtain TAs or the TAs and C-RNTIs, and then notify the network of association relationships; or the first UE applies for a plurality of dedicated random access resources from the network in a unified manner, and allocates, to the plurality of pieces of second UE, TAs or the TAs and C-RNTIs that are used in a contention-free random access procedure.

Herein, a main reason why the description of "TAs or the TAs and C-RNTIs" is used is that obtaining of the TAs requires a random access procedure, but obtaining of the C-RNTIs may be implemented through a random access procedure or through allocation based on dedicated signaling, and the TAs and the C-RNTIs may be obtained together or separately.

### Embodiment 2: Transmission of uplink control information

There are the following two model establishing manners in which uplink information is transmitted:
Manner 1: Two pieces of UE are considered as two independent pieces of UE from L2/L1, and their L2/L1 processes completely reuse behavior of existing UE.
Manner 2: The primary UE is responsible for uplink sending of L2/L1, and distinguishes a UE ID during the sending.

There are two reasons why manner 2 exists. Reason 1: The uplink sending cannot be completed due to limitation of transmit power of the other piece of UE or for a purpose of power saving. Reason 2: For convenience of design and maintenance, it is seen from a network side that only one piece of UE performs uplink sending.

For manner 1, uplink dedicated resources, for example, an uplink D-SR resource and a PUCCH resource, are independently configured for the two pieces of UE, and are used for respective uplink sending; and the two pieces of UE perform uplink transmission independently according to their own requirements. It is seen from an MAC layer that various MAC CEs, for example, a BSR (Buffer Status Report) MAC CE, a PHR (Power Headroom Report) MAC CE, and a recommended bit rate MAC CE, are also sent independently according to their own requirements. From perspectives of a system and a gNB, it is seen that the two pieces of UE are maintained.

For manner 2, because all uplink transmission needs to be performed in one piece of UE, generally, the primary UE, and the primary UE generally has a better capability or a link monitoring mechanism, UE IDs need to be distinguished during transmission. For L1 information, there are the following two manners to distinguish the UE IDs:
Manner 1: Different time-frequency resource positions are divided at a resource position for different pieces of UE, so that UE distinguishing is performed naturally.
Manner 2: The UE IDs are carried in signaling content, and if there are two pieces of UE, 1 bit is used to distinguish primary UE from secondary UE.

For a MAC CE, because the MAC CE performs transmission via reusing, UE distinguishing cannot be implemented based on a transmitted time-frequency resource. Therefore, the distinguishing degree and efficiency of reporting are improved only in the following manner: Add, in a PDU format (format) of the MAC CE, a domain used for distinguishing a UE ID, and expand a cascade capable of implementing reporting of two or more pieces of UE.

For a UE side, second UE needs to transfer its own L2/L1 reporting content to first UE, and then the first UE reports the content. In addition, because control-information timers, such as a BSR retransmission timer and a BSR periodical timer, are also maintained in a reporting procedure, it is recommended that these timers also be maintained respectively based on each piece of UE, that is, each piece of UE maintains its own timer, or these timers are maintained by first UE in a unified manner, and each piece of the second UE may interact with the first UE to implement state updating, triggering, and the like of the timers.

### Embodiment 3: Resource scheduling

Resource scheduling is classified into two types: dynamic resource scheduling and semi-static resource scheduling.

Because dynamic resource scheduling has high timeliness, that is, a response generally needs to be made within several milliseconds, it is recommended that different pieces of UE perform dynamic resource scheduling independently. In other words, during dynamic scheduling, first UE monitors PDCCH scheduling information scrambled by using its own C-RNTI, and performs receiving or sending based on a resource position indicated by the scheduling information, so that subsequent feedback is performed based on the existing position. Second UE performs the same operations.

For allocation and activation of semi-static resources, the semi-static resources are classified into two types: Type 1: RRC signaling directly indicates information about a time-frequency resource position, a cycle, and the like; and UE can directly use the information without any activation. Type 2: RRC signaling indicates only information about a cycle, and information about a time-frequency resource position needs to be scheduled or activated by further monitoring a PDCCH.

There are the following two differentiating manners for portions of the RRC signaling in the two types of semi-static resource allocation:
Manner 1: The RRC signaling is respectively sent to different pieces of UE, and only a semi-static resource is allocated to the UE.
Manner 2: The RRC signaling is sent to first UE in a unified manner; and UE to which the semi-static resource is allocated is clearly designated in the signaling, or is not designated but is negotiated by a plurality of pieces of UE, and each piece of UE obtains its own semi-static resource configuration.

Generally, each piece of UE is allowed to perform data receiving and sending only at its own semi-static resource position. Particularly, if one piece of UE does not have any data to be sent at its own semi-static resource, another piece of UE that has data may perform sending via fast inter-UE interaction for one or more times of transferring the semi-static resource. For a network side, UE data may be differentiated based on information such as an explicitly carried UE ID or an implicit logical channel identity (Logical Channel Identity, LCID).

Therefore, in this embodiment of this application, in multi-UE operations, UE performs a transmission operation independently, or primary UE assists secondary UE in performing a transmission operation.

During TA obtaining of secondary UE, the secondary UE may use a contention-based random access procedure for common UE, to obtain a TA or a TA and a C-RNTI. The secondary UE reports an association with primary UE to a network.

The primary UE may obtain a dedicated random access resource from the network, and forwards the dedicated random access resource to the secondary UE. Based on the dedicated random access resource, the secondary UE uses a contention-free random access procedure to obtain the TA or the TA and the C-RNTI.

The plurality of pieces of UE independently perform dynamically scheduled receiving and subsequent transmission and feedback. The plurality of pieces of UE respectively obtain semi-static resources through RRC procedures, use the semi-static resources, and give feedback.

The network sends the semi-static resources of the plurality of pieces of UE to primary UE through an RRC procedure, and explicitly indicates resource allocation of each piece of UE. Alternatively, the resources are allocated by the primary UE; or allocation of the resources is negotiated by the plurality of pieces of UE, and then the resources are allocated to each piece of UE.

One piece of UE may transfer a semi-static resource to another piece of UE temporarily.

The network may allocate, to each piece of UE, an independent PUCCH resource that is used for physical layer reporting.

Each piece of UE may perform a reporting procedure of a MAC CE independently.

The network may send PUCCH resource allocation of all the pieces of UE to the primary UE. The primary UE assists another piece of UE in reporting.

The primary UE may assist the another piece of UE in reporting a MAC CE, and performs operations such as differentiating UE in a MAC CE PDU format and expanding a cascade.

According to this embodiment of this application, a radio access network (Radio Access Network, RAN) side may configure an aggregate bearer or respective bearers for the plurality of pieces of UE, so that the UE can perform multi-device joint transmission under the control of the network side. This ensures service experience and system efficiency of the UE.

It should be noted that, the data transmission method provided in this embodiment of this application may be performed by a data transmission apparatus or a control module that is in the data transmission apparatus and that is configured to perform the data transmission method. In this embodiment of this application, the data transmission apparatus provided in this embodiment of this application is described by using an example in which the data transmission apparatus performs the data transmission method.

FIG. 5 is a structural diagram of a data transmission apparatus according to an embodiment of this application.

As shown in FIG. 5, the data transmission apparatus 500 includes:
a first performing module 501, configured to perform a first operation, where the first operation includes at least one of the following:
receiving downlink information that is of a first object and that is sent by a network side device; and
sending uplink information of the first object to the network side device, where
the first object includes some or all of Q terminals, the Q terminals support jointly receiving data of a first service, the primary terminal is a primary terminal in the Q terminals, and Q is an integer greater than 1.

Optionally, the Q terminals include at least one secondary terminal, and the data transmission apparatus 500 further includes:
a second performing module, configured to perform a second operation, where the second operation includes at least one of the following:
after receiving first downlink information of a first terminal, sending the first downlink information to the first terminal, where the first terminal is any secondary terminal in the first object; and
before sending first uplink information of a second terminal, receiving the first uplink information sent by the second terminal, where the second terminal is any secondary terminal in the first object.

Optionally, the downlink information includes at least one of the following: a timing advance TA, a cell-radio network temporary identifier C-RNTI, and resource scheduling information;
or
the uplink information includes at least one of the following: control information of a physical layer, control information of a media access control MAC layer, and feedback information of a hybrid automatic repeat request HARQ.

Optionally, in a case that the downlink information includes a TA, the data transmission apparatus 500 further includes:
a first receiving module, configured to: after an RRC connection with the network side device is established, receive first information sent by the network side device, where the first information includes a dedicated random access resource of a third terminal; and
a second sending module, configured to send the first information to the third terminal, where
the third terminal includes at least one secondary terminal in the Q terminals.

Optionally, the first information further includes a C-RNTI of the third terminal.

Optionally, the first performing module 501 is specifically configured to perform any one of the following steps:
sending, at a first time-frequency resource position, uplink information of a fourth terminal to the network side device, where the first time-frequency resource position corresponds to the fourth terminal, and the fourth terminal is any terminal in the first obj ect; and
sending second information to the network side device, where the second information includes at least one piece of uplink information as well as identifier information of a terminal corresponding to the at least one piece of uplink information.

Optionally, in a case that the downlink information includes resource scheduling information, the first object is some or all of the Q terminals, or the primary terminal.

Optionally, resource scheduling information of each terminal in the first object is determined in any one of the following manners: being indicated by the downlink information, being allocated by the primary terminal, and being negotiated by the first object.

Optionally, in a case that the downlink information includes resource scheduling information and that the resource scheduling information is semi-static resource scheduling information, the data transmission apparatus 500 further includes:
a second receiving module, configured to receive third information sent by a fifth terminal, where the third information indicates that a first semi-static resource of the fifth terminal is in an idle state; and
a first transmission module, configured to transmit fourth information through the first semi-static resource, where the fourth information includes identifier information of the primary terminal as well as data of the primary terminal;
wherein the fifth terminal is any secondary terminal in the Q terminals.

Optionally, in a case that the downlink information includes resource scheduling information and that the resource scheduling information is semi-static resource scheduling information, the data transmission apparatus 500 further includes:
a second sending module, configured to send fifth information to a sixth terminal, where the fifth information indicates that a second semi-static resource of the primary terminal is in an idle state; and
the sixth terminal includes at least one secondary terminal in the Q terminals.

The data transmission apparatus 500 provided in the embodiments of this application can implement the processes implemented in the method embodiments in FIG. 2, with the same technical effect achieved. To avoid repetition, details are not described herein again.

FIG. 6 is a structural diagram of a data transmission apparatus according to an embodiment of this application.

As shown in FIG. 6, the data transmission apparatus 600 includes:
a third performing module 601, configured to perform a third operation, where the third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

Optionally, the downlink information includes at least one of the following: a TA, a C-RNTI, and resource scheduling information; or the uplink information includes at least one of the following: control information of a physical layer, control information of a MAC layer, and feedback information of a HARQ.

Optionally, in a case that the downlink information includes a TA, the downlink information of the secondary terminal is obtained through a contention-based random access procedure, or the downlink information of the secondary terminal is obtained through a contention-free random access procedure.

Optionally, the downlink information further includes a C-RNTI.

Optionally, in a case that the downlink information of the secondary terminal is obtained through the contention-based random access procedure, the data transmission apparatus 600 further includes:
a third sending module, configured to: after an RRC connection with the network side device is established, send sixth information to the network side device, where the sixth information includes identifier information of the primary terminal.

Optionally, in a case that the downlink information of the secondary terminal is obtained through the contention-free random access procedure, the third performing module is configured to:
receive first information sent by the primary terminal, where the first information includes a dedicated random access resource of the secondary terminal; and
initiate the contention-free random access procedure by using the dedicated random access resource, where the contention-free random access procedure is used to obtain the TA.

Optionally, the first information further includes a C-RNTI of the secondary terminal.

Optionally, the uplink information of the secondary terminal is sent by the secondary terminal to the network side device through an uplink dedicated resource corresponding to the secondary terminal; or
the uplink information of the secondary terminal is sent by the primary terminal to the network side device through an uplink dedicated resource corresponding to the primary terminal.

Optionally, the uplink information of the secondary terminal is sent at a time domain resource position corresponding to the secondary terminal; or the uplink information of the secondary terminal is carried in second information, where the second information includes the uplink information of the secondary terminal as well as identifier information of the secondary terminal.

Optionally, in a case that the downlink information includes resource scheduling information, the second object is the network side device or the primary terminal.

Optionally, in a case that the second object is the primary terminal, resource scheduling information of the secondary terminal is determined in any one of the following manners: being indicated by the downlink information, being allocated by the primary terminal, and being negotiated by some or all of the Q terminals.

Optionally, in a case that the downlink information includes resource scheduling information and that the resource scheduling information is semi-static resource scheduling information, the data transmission apparatus 600 further includes:
a third receiving module, configured to receive seventh information sent by a seventh terminal, where the seventh information indicates that a third semi-static resource of the first secondary terminal is in an idle state; and
a second transmission module, configured to transmit the seventh information through the third semi-static resource, where the seventh information includes identifier information of the secondary terminal as well as data of the secondary terminal;
wherein the seventh terminal is any terminal in the Q terminals other than the secondary terminal.

Optionally, in a case that the downlink information includes resource scheduling information and that the resource scheduling information is semi-static resource scheduling information, the data transmission apparatus 600 further includes:
a fourth sending module, configured to send eighth information to an eighth terminal, where the eighth information indicates that a fourth semi-static resource of the secondary terminal is in an idle state, and the eighth terminal is any terminal in the Q terminals other than the secondary terminal.

The data transmission apparatus 600 provided in the embodiments of this application can implement the processes implemented in the method embodiments in FIG. 3, with the same technical effect achieved. To avoid repetition, details are not described herein again.

FIG. 7 is a structural diagram of a data transmission apparatus according to an embodiment of this application.

As shown in FIG. 7, the data transmission apparatus 700 includes:
a fourth performing module 701, configured to perform a fourth operation, where the fourth operation includes at least one of the following:
sending downlink information of a fourth object to a third object; and
receiving uplink information that is of the fourth object and that is sent by the third object, where
the third object includes a primary terminal in Q terminals, the Q terminals support jointly receiving data of a first service, the fourth object includes some or all of the Q terminals, and Q is an integer greater than 1.

Optionally, the downlink information includes at least one of the following: a TA, a C-RNTI, and resource scheduling information; or the uplink information includes at least one of the following: control information of a physical layer, control information of a MAC layer, and feedback information of a HARQ.

Optionally, in a case that the downlink information includes a TA, the downlink information of the fourth object meets at least one of the following:
that downlink information of a ninth terminal is sent through a contention-based random access procedure, where the ninth terminal includes at least one secondary terminal in the fourth object; and
that downlink information of a tenth terminal is sent through a contention-free random access procedure, where the tenth terminal includes at least one secondary terminal in the fourth object.

Optionally, the downlink information further includes a C-RNTI.

Optionally, in a case that the downlink information of the ninth terminal is sent through the contention-based random access procedure, the data transmission apparatus 700 further includes:
a fourth receiving module, configured to: after an RRC connection with the ninth terminal is established, receive sixth information sent by the ninth terminal, where the sixth information includes identifier information of the primary terminal; and
a first establishment module, configured to establish a first architecture based on the sixth information, where the first architecture includes the primary terminal and the ninth terminal.

Optionally, in a case that the downlink information of the tenth terminal is sent through the contention-free random access procedure, the data transmission apparatus 700 further includes at least one of the following:
a fifth sending module, configured to: after an RRC connection with the primary terminal is established, send first information to the primary terminal, where the first information includes a dedicated random access resource of the tenth terminal; and
a second establishment module, configured to: after an RRC connection with the tenth terminal is established, establish a first architecture, where the first architecture includes the primary terminal and the tenth terminal.

Optionally, the first information further includes a C-RNTI of the tenth terminal.

Optionally, the data transmission apparatus 700 further includes any one of the following:
a first allocation module, configured to allocate Q first uplink dedicated resources to the Q terminals, where the Q first uplink dedicated resources are in a one-to-one correspondence with the Q terminals; and
a second allocation module, configured to allocate a second uplink dedicated resource to the primary terminal in the Q terminals, where the second uplink dedicated resource corresponds to the Q terminals.

Optionally, in a case that the third object is the primary terminal, the fourth performing module 701 is configured to perform any one of the following steps:
receiving, at a second time-frequency resource position, uplink information that is of the fourth object and that is sent by the primary terminal, where the second time-frequency resource position corresponds to the fourth object; and
receiving second information sent by the primary terminal, where the second information includes at least one piece of uplink information as well as identifier information of a terminal corresponding to the at least one piece of uplink information.

Optionally, in a case that the downlink information includes resource scheduling information and that the resource scheduling information is semi-static resource scheduling information, the data transmission apparatus 700 further includes:
a fifth receiving module, configured to receive ninth information through a fifth semi-static resource, where the ninth information includes identifier information of an eleventh terminal as well as data of the eleventh terminal; and
the fifth semi-static resource is a semi-static resource allocated to a fifth terminal, the fifth terminal is any terminal in the Q terminals other than the eleventh terminal, and the eleventh terminal is any terminal in the Q terminals.

The data transmission apparatus 700 provided in this embodiment of this application can implement the processes implemented in the method embodiment in FIG. 4, with the same technical effect achieved. To avoid repetition, details are not described herein again.

The data transmission apparatus in this embodiment of this application may be an apparatus, an apparatus or an electronic device having an operating system, or may be a component, an integrated circuit, or a chip in an apparatus or an electronic device. The apparatus or the electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application. The apparatus or the electronic device may be a network side device. The network side device may include but is not limited to the types of the network side device 12 listed above. This is not specifically limited in the embodiments of this application.

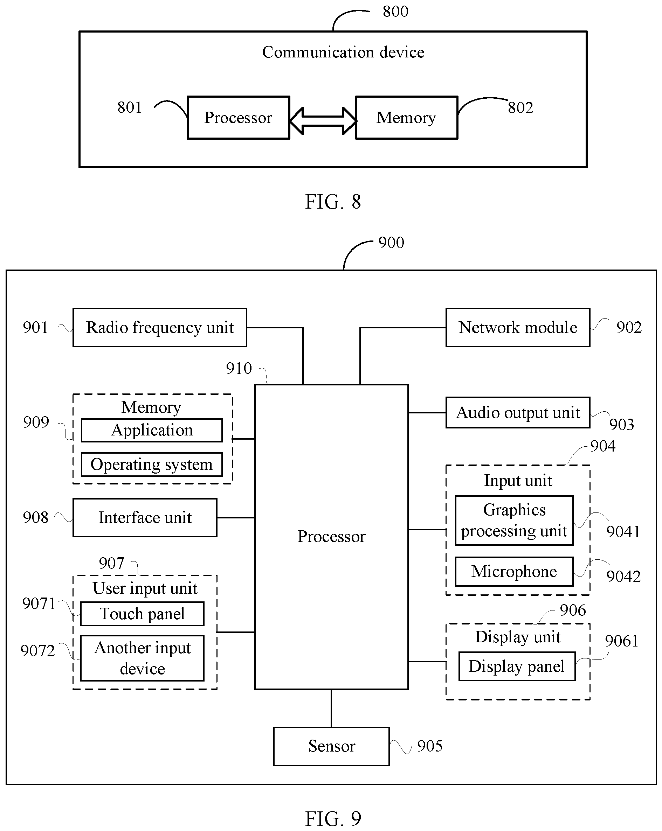

Optionally, as shown in FIG. 8, an embodiment of this application further provides a communication device 800, including a processor 801, a memory 802, and a program or instructions stored in the memory 802 and executable on the processor 801. For example, in a case that the communication device 800 is a primary terminal, when the program or the instructions are executed by the processor 801, the processes of the method embodiment in FIG. 2 are implemented, with the same technical effects achieved. In a case that the communication device 800 is a secondary terminal, when the program or the instructions are executed by the processor 801, the processes of the method embodiment in FIG. 3 are implemented, with the same technical effects achieved. In a case that the communication device 800 is a network side device, when the program or the instructions are executed by the processor 801, the processes of the method embodiment in FIG. 4 are implemented, with the same technical effects achieved. To avoid repetition, details are not described herein again.

An embodiment of this application further provides a terminal, including a processor and a communication interface.

In a case that the terminal is a primary terminal, the communication interface is configured to:
perform a first operation, where the first operation includes at least one of the following:
receiving downlink information that is of a first object and that is sent by a network side device; and
sending uplink information of the first object to the network side device, where
the first object includes some or all of Q terminals, the Q terminals support jointly receiving data of a first service, the primary terminal is a primary terminal in the Q terminals, and Q is an integer greater than 1.

In a case that the terminal is a secondary terminal, the communication interface is configured to:
perform a third operation, where the third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

This terminal embodiment corresponds to the foregoing method embodiment on the terminal side. Each implementation process and implementation of the foregoing method embodiment may be applicable to this terminal embodiment, with the same technical effects achieved. Specifically, FIG. 9 is a schematic diagram of a hardware structure of a terminal 900 according to an embodiment of this application.

The terminal 900 includes but is not limited to at least a part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (such as a battery) that supplies power to each component. The power supply may be logically connected to the processor 910 through a power supply management system. Therefore, functions such as management of charging, discharging, and power consumption are implemented by using the power supply management system. The structure of the terminal shown in FIG. 9 does not constitute a limitation on the terminal. The terminal may include more or fewer components than those shown in the figure, or some components may be combined, or there may be a different component arrangement. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a static picture or a video obtained by an image capture apparatus (for example, a camera) in a video capture mode or an image capture mode. The display unit 906 may include a display panel 9061. The display panel 9061 may be configured in a form of a liquid crystal display, an organic light-emitting diode, or the like. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and sends the downlink data to the processor 910 for processing; and in addition, sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or instructions and various data. The memory 909 may mainly include a program or instruction storage area and a data storage area. The program or the instruction storage area may store an operating system, and an application or an instruction required by at least one function (for example, a sound playing function or an image playing function). In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 910 may include one or more processing units. Optionally, the processor 910 may integrate an application processor and a modem processor. The application processor mainly processes an operating system, a user interface, an application, instructions, and the like. The modem processor mainly processes wireless communication, such as a baseband processor. It may be understood that, alternatively, the modem processor may not be integrated in the processor 910.

In a case that the terminal is a primary terminal, the radio frequency unit 901 is configured to:
perform a first operation, where the first operation includes at least one of the following:
receiving downlink information that is of a first object and that is sent by a network side device; and
sending uplink information of the first object to the network side device, where
the first object includes some or all of Q terminals, the Q terminals support jointly receiving data of a first service, the primary terminal is a primary terminal in the Q terminals, and Q is an integer greater than 1.

In this case, the terminal 900 in this embodiment may implement the processes in the method embodiment in FIG. 2 in the embodiments of this application, with the same beneficial effects achieved. To avoid repetition, details are not described herein again.

In a case that the terminal is a secondary terminal, the radio frequency unit 901 is configured to:
perform a third operation, where the third operation includes at least one of the following:
receiving downlink information of the secondary terminal from a second object; and
sending uplink information of the secondary terminal to the second object, where
the second object is a network side device or a primary terminal in Q terminals, the Q terminals support jointly receiving data of a first service, the secondary terminal is any secondary terminal in the Q terminals, and Q is an integer greater than 1.

In this case, the terminal 900 in this embodiment may implement the processes in the method embodiment in FIG. 3 in the embodiments of this application, with the same beneficial effects achieved. To avoid repetition, details are not described herein again.

An embodiment of this application further provides a network side device, including a processor and a communication interface. The communication interface is configured to:
perform a fourth operation, where the fourth operation includes at least one of the following:
sending downlink information of a fourth object to a third object; and
receiving uplink information that is of the fourth object and that is sent by the third object, where
the third object includes a primary terminal in Q terminals, the Q terminals support jointly receiving data of a first service, the fourth object includes some or all of the Q terminals, and Q is an integer greater than 1.

This network side device embodiment corresponds to the foregoing method embodiment on the network side device. Each implementation process and implementation of the foregoing method embodiment may be applicable to this network side device embodiment, with the same technical effects achieved.

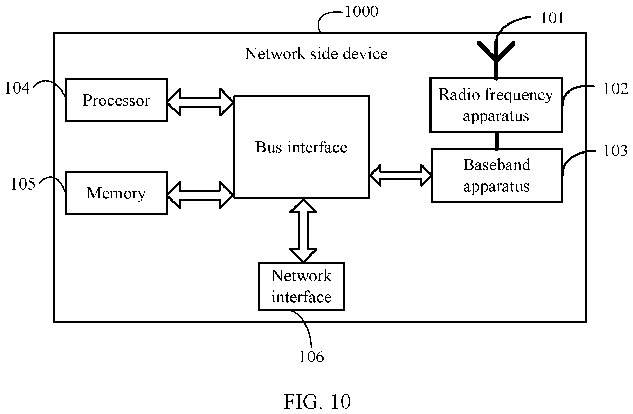

Specifically, an embodiment of this application further provides a network side device. As shown in FIG. 10, a network device 1000 includes an antenna 101, a radio frequency apparatus 102, and a baseband apparatus 103. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes information that needs to be sent, and sends processed information to the radio frequency apparatus 102. The radio frequency apparatus 102 processes the received information, and sends processed information through the antenna 101.

The method performed by the network side device in the foregoing embodiment may be implemented in the baseband apparatus 103. The baseband apparatus 103 includes a processor 104 and a memory 105.

The baseband apparatus 103 may include, for example, at least one baseband board. A plurality of chips are disposed on the baseband board. As shown in FIG. 10, one of the chips is, for example, the processor 104, which is connected to the memory 105, so as to invoke a program in the memory 105 to perform operations of the network device shown in the foregoing method embodiments.

The baseband apparatus 103 may further include a network interface 106, configured to exchange information with the radio frequency apparatus 102. For example, the interface is a common public radio interface (common public radio interface, CPRI for short).

Specifically, the network side device in this embodiment of this application further includes instructions or a program stored in the memory 105 and executable on the processor 104. The processor 104 invokes the instructions or the program in the memory 105 to perform the processes of the method embodiment in FIG. 4 or perform the method performed by the modules shown in FIG. 7, with the same technical effects achieved. To avoid repetition, details are not described herein again.

An embodiment of this application further provides a computer-readable storage medium. The computer-readable storage medium stores a computer program. The computer program, when executed by a processor, implements the processes of the foregoing data transmission method embodiments, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of this application further provides a readable storage medium. The readable storage medium may be non-volatile or volatile. The readable storage medium stores a program or instructions. The program or the instructions, when executed by a processor, implement the processes of the foregoing method embodiment in FIG. 2, FIG. 3, or FIG. 4, with the same technical effects achieved. To avoid repetition, details are not described herein again.

An embodiment of this application further provides a computer program product. The computer program product is stored in a non-transitory storage medium. The computer program product is executed by at least one processor, to implement the processes of the foregoing method embodiment in FIG. 2, FIG. 3, or FIG. 4, with the same technical effects achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions, to implement the processes of the foregoing method embodiment in FIG. 2, FIG. 3, or FIG. 4, with the same technical effects achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or any other variant thereof are intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by "including a ..." does not exclude another same element in a process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are merely illustrative instead of restrictive. Under the enlightenment of this application, a person of ordinary skill in the art may make many forms without departing from the essence of this application and the protection scope of the claims, all of which fall within the protection of this application.

## Claims

1. A data transmission method, comprising:
performing, by a primary terminal, a first operation, wherein the first operation comprises at least one of following:
receiving downlink information that is of a first object and that is sent by a network side device; and
sending uplink information of the first object to the network side device, wherein
the first object comprises some or all of Q terminals, the Q terminals support jointly receiving data of a first service, the primary terminal is a primary terminal in the Q terminals, and Q is an integer greater than 1.

2. The method according to claim 1, wherein the Q terminals comprise at least one secondary terminal, and the method further comprises:
performing, by the primary terminal, a second operation, wherein the second operation comprises at least one of following:
after receiving first downlink information of a first terminal, sending the first downlink information to the first terminal, wherein the first terminal is any secondary terminal in the first object; and
before sending first uplink information of a second terminal, receiving the first uplink information sent by the second terminal, wherein the second terminal is any secondary terminal in the first object.

3. The method according to claim 1, wherein the downlink information comprises at least one of following: a timing advance TA, a cell-radio network temporary identifier C-RNTI, and resource scheduling information;
or
the uplink information comprises at least one of following: control information of a physical layer, control information of a media access control MAC layer, and feedback information of a hybrid automatic repeat request HARQ.

4. The method according to claim 1, wherein in a case that the downlink information comprises a TA, the method further comprises:
after establishing an RRC connection with the network side device, receiving, by the primary terminal, first information sent by the network side device, wherein the first information comprises a dedicated random access resource of a third terminal; and
sending, by the primary terminal, the first information to the third terminal, wherein
the third terminal comprises at least one secondary terminal in the Q terminals.

5. The method according to claim 4, wherein the first information further comprises a C-RNTI of the third terminal.

6. The method according to claim 1, wherein the sending uplink information of the first object to the network side device comprises any one of following:
sending, by the primary terminal at a first time-frequency resource position, uplink information of a fourth terminal to the network side device, wherein the first time-frequency resource position corresponds to the fourth terminal, and the fourth terminal is any terminal in the first object; and
sending, by the primary terminal, second information to the network side device, wherein the second information comprises at least one piece of uplink information as well as identifier information of a terminal corresponding to the at least one piece of uplink information.

7. The method according to claim 1, wherein resource scheduling information of each terminal in the first object is determined in any one of following manners: being indicated by the downlink information, being allocated by the primary terminal, and being negotiated by the first object.

8. The method according to claim 1, wherein in a case that the downlink information comprises resource scheduling information and that the resource scheduling information is semi-static resource scheduling information, after the performing, by a primary terminal, a first operation, the method further comprises:
receiving, by the primary terminal, third information sent by a fifth terminal, wherein the third information indicates that a first semi-static resource of the fifth terminal is in an idle state; and
transmitting, by the primary terminal, fourth information through the first semi-static resource, wherein the fourth information comprises identifier information of the primary terminal as well as data of the primary terminal;
wherein the fifth terminal is any secondary terminal in the Q terminals.

9. The method according to claim 1, wherein in a case that the downlink information comprises resource scheduling information and that the resource scheduling information is semi-static resource scheduling information, after the performing, by a primary terminal, a first operation, the method further comprises:
sending, by the primary terminal, fifth information to a sixth terminal, wherein the fifth information indicates that a second semi-static resource of the primary terminal is in an idle state; and
the sixth terminal comprises at least one secondary terminal in the Q terminals.

10. A data transmission method, comprising:
performing, by a secondary terminal, a third operation, wherein the third operation comprises at least one of following:
receiving downlink information of the secondary terminal from a second object; and
sending uplink information of the secondary terminal to the second object, wherein
the second object is a network side device or a primary terminal in Q terminals, the Q terminals support jointly receiving data of a first service, the secondary terminal is any secondary terminal in the Q terminals, and Q is an integer greater than 1.

11. The method according to claim 10, wherein the downlink information comprises at least one of following: a TA, a C-RNTI, and resource scheduling information; or
the uplink information comprises at least one of following: control information of a physical layer, control information of a MAC layer, and feedback information of a HARQ.

12. The method according to claim 10, wherein in a case that the downlink information comprises a TA, the downlink information of the secondary terminal is obtained through a contention-based random access procedure, or the downlink information of the secondary terminal is obtained through a contention-free random access procedure.

13. The method according to claim 12, wherein the downlink information further comprises a C-RNTI.

14. The method according to claim 12, wherein in a case that the downlink information of the secondary terminal is obtained through the contention-based random access procedure, the method further comprises:
after establishing an RRC connection with the network side device, sending, by the secondary terminal, sixth information to the network side device, wherein the sixth information comprises identifier information of the primary terminal.

15. The method according to claim 12, wherein in a case that the downlink information of the secondary terminal is obtained through the contention-free random access procedure, the receiving downlink information of the secondary terminal from a second object comprises:
receiving, by the secondary terminal, first information sent by the primary terminal, wherein the first information comprises a dedicated random access resource of the secondary terminal; and
initiating, by the secondary terminal, the contention-free random access procedure by using the dedicated random access resource, wherein the contention-free random access procedure is used to obtain the TA.

16. The method according to claim 15, wherein the first information further comprises a C-RNTI of the secondary terminal.

17. The method according to claim 10, wherein the uplink information of the secondary terminal is sent by the secondary terminal to the network side device through an uplink dedicated resource corresponding to the secondary terminal;
or
the uplink information of the secondary terminal is sent by the primary terminal to the network side device through an uplink dedicated resource corresponding to the primary terminal.

18. The method according to claim 10, wherein the uplink information of the secondary terminal is sent at a time domain resource position corresponding to the secondary terminal; or
the uplink information of the secondary terminal is carried in second information, wherein the second information comprises the uplink information of the secondary terminal as well as identifier information of the secondary terminal.

19. The method according to claim 10, wherein in a case that the second object is the primary terminal, resource scheduling information of the secondary terminal is determined in any one of following manners: being indicated by the downlink information, being allocated by the primary terminal, and being negotiated by some or all of the Q terminals.

20. The method according to claim 10, wherein in a case that the downlink information comprises resource scheduling information and that the resource scheduling information is semi-static resource scheduling information, after the performing, by a secondary terminal, a third operation, the method further comprises:
receiving, by the secondary terminal, seventh information sent by a seventh terminal, wherein the seventh information indicates that a third semi-static resource of the first secondary terminal is in an idle state; and
transmitting, by the secondary terminal, the seventh information through the third semi-static resource, wherein the seventh information comprises identifier information of the secondary terminal as well as data of the secondary terminal;
wherein the seventh terminal is any terminal in the Q terminals other than the secondary terminal.

21. The method according to claim 10, wherein in a case that the downlink information comprises resource scheduling information and that the resource scheduling information is semi-static resource scheduling information, after the performing, by a secondary terminal, a third operation, the method further comprises:
sending, by the secondary terminal, eighth information to an eighth terminal, wherein the eighth information indicates that a fourth semi-static resource of the secondary terminal is in an idle state, and the eighth terminal is any terminal in the Q terminals other than the secondary terminal.

22. A data transmission method, comprising:
performing, by a network side device, a fourth operation, wherein the fourth operation comprises at least one of following:
sending downlink information of a fourth object to a third object; and
receiving uplink information that is of the fourth object and that is sent by the third object, wherein
the third object comprises a primary terminal in Q terminals, the Q terminals support jointly receiving data of a first service, the fourth object comprises some or all of the Q terminals, and Q is an integer greater than 1.

23. The method according to claim 22, wherein the downlink information comprises at least one of following: a TA, a C-RNTI, and resource scheduling information; or the uplink information comprises at least one of following: control information of a physical layer, control information of a MAC layer, and feedback information of a HARQ.

24. The method according to claim 22, wherein in a case that the downlink information comprises a TA, the downlink information of the fourth object meets at least one of following:
that downlink information of a ninth terminal is sent through a contention-based random access procedure, wherein the ninth terminal comprises at least one secondary terminal in the fourth object; and
that downlink information of a tenth terminal is sent through a contention-free random access procedure, wherein the tenth terminal comprises at least one secondary terminal in the fourth object.

25. The method according to claim 24, wherein the downlink information further comprises a C-RNTI.

26. The method according to claim 24, wherein in a case that the downlink information of the ninth terminal is sent through the contention-based random access procedure, the method further comprises:
after establishing an RRC connection with the ninth terminal, receiving, by the network side device, sixth information sent by the ninth terminal, wherein the sixth information comprises identifier information of the primary terminal; and
establishing, by the network side device, a first architecture based on the sixth information, wherein the first architecture comprises the primary terminal and the ninth terminal.

27. The method according to claim 24, wherein in a case that the downlink information of the tenth terminal is sent through the contention-free random access procedure, the method further comprises at least one of following:
after establishing an RRC connection with the primary terminal, sending, by the network side device, first information to the primary terminal, wherein the first information comprises a dedicated random access resource of the tenth terminal; and
after establishing an RRC connection with the tenth terminal, establishing, by the network side device, a first architecture, wherein the first architecture comprises the primary terminal and the tenth terminal.

28. The method according to claim 27, wherein the first information further comprises a C-RNTI of the tenth terminal.

29. The method according to claim 22, wherein before the performing, by a network side device, a fourth operation, the method further comprises any one of following:
allocating, by the network side device, Q first uplink dedicated resources to the Q terminals, wherein the Q first uplink dedicated resources are in a one-to-one correspondence with the Q terminals; and
allocating, by the network side device, a second uplink dedicated resource to the primary terminal in the Q terminals, wherein the second uplink dedicated resource corresponds to the Q terminals.

30. The method according to claim 22, wherein in a case that the third object is the primary terminal, the receiving uplink information that is of the fourth object and that is sent by the third object comprises any one of following:
receiving, by the network side device at a second time-frequency resource position, uplink information that is of the fourth object and that is sent by the primary terminal, wherein the second time-frequency resource position corresponds to the fourth object; and
receiving, by the network side device, second information sent by the primary terminal, wherein the second information comprises at least one piece of uplink information as well as identifier information of a terminal corresponding to the at least one piece of uplink information.

31. The method according to claim 22, wherein in a case that the downlink information comprises resource scheduling information and that the resource scheduling information is semi-static resource scheduling information, after the performing, by a network side device, a fourth operation, the method further comprises:
receiving, by the network side device, ninth information through a fifth semi-static resource, wherein the ninth information comprises identifier information of an eleventh terminal as well as data of the eleventh terminal; and
the fifth semi-static resource is a semi-static resource allocated to a fifth terminal, the fifth terminal is any terminal in the Q terminals other than the eleventh terminal, and the eleventh terminal is any terminal in the Q terminals.

32. A data transmission apparatus, comprising:
a first performing module, configured to perform a first operation, wherein the first operation comprises at least one of the following:
receiving downlink information that is of a first object and that is sent by a network side device; and
sending uplink information of the first object to the network side device, wherein
the first object comprises some or all of Q terminals, the Q terminals support jointly receiving data of a first service, the primary terminal is a primary terminal in the Q terminals, and Q is an integer greater than 1.

33. The data transmission apparatus according to claim 32, wherein the first performing module is specifically configured to perform any one of the following steps:
sending, at a first time-frequency resource position, uplink information of a fourth terminal to the network side device, wherein the first time-frequency resource position corresponds to the fourth terminal, and the fourth terminal is any terminal in the first obj ect; and
sending second information to the network side device, wherein the second information comprises at least one piece of uplink information as well as identifier information of a terminal corresponding to the at least one piece of uplink information.

34. The data transmission apparatus according to claim 32, wherein in a case that the downlink information comprises resource scheduling information and that the resource scheduling information is semi-static resource scheduling information, the data transmission apparatus further comprises:
a second receiving module, configured to receive third information sent by a fifth terminal, wherein the third information indicates that a first semi-static resource of the fifth terminal is in an idle state; and
a first transmission module, configured to transmit fourth information through the first semi-static resource, wherein the fourth information comprises identifier information of the primary terminal as well as data of the primary terminal;
wherein the fifth terminal is any secondary terminal in the Q terminals.

35. A data transmission apparatus, comprising:
a third performing module, configured to perform a third operation, wherein the third operation comprises at least one of the following:
receiving downlink information of a secondary terminal from a second object; and
sending uplink information of the secondary terminal to the second object, wherein
the second object is a network side device or a primary terminal in Q terminals, the Q terminals support jointly receiving data of a first service, the secondary terminal is any secondary terminal in the Q terminals, and Q is an integer greater than 1.

36. The data transmission apparatus according to claim 35, wherein in a case that the downlink information comprises a TA, the downlink information of the secondary terminal is obtained through a contention-based random access procedure, or the downlink information of the secondary terminal is obtained through a contention-free random access procedure.

37. The data transmission apparatus according to claim 35, wherein the uplink information of the secondary terminal is sent by the secondary terminal to the network side device through an uplink dedicated resource corresponding to the secondary terminal; or
the uplink information of the secondary terminal is sent by the primary terminal to the network side device through an uplink dedicated resource corresponding to the primary terminal.

38. The data transmission apparatus according to claim 35, wherein the uplink information of the secondary terminal is sent at a time domain resource position corresponding to the secondary terminal; or
the uplink information of the secondary terminal is carried in second information, wherein the second information comprises the uplink information of the secondary terminal as well as identifier information of the secondary terminal.

39. A data transmission apparatus, comprising:
a fourth performing module, configured to perform a fourth operation, wherein the fourth operation comprises at least one of the following:
sending downlink information of a fourth object to a third object; and
receiving uplink information that is of the fourth object and that is sent by the third object, wherein
the third object comprises a primary terminal in Q terminals, the Q terminals support jointly receiving data of a first service, the fourth object comprises some or all of the Q terminals, and Q is an integer greater than 1.

40. A communication device, comprising a processor, a memory, and a program or instructions stored in the memory and executable on the processor, wherein when the program or the instructions are executed by the processor, steps of the data transmission method according to any one of claims 1 to 9 are implemented, or steps of the data transmission method according to any one of claims 10 to 21 are implemented, or steps of the data transmission method according to any one of claims 22 to 31 are implemented.

41. A readable storage medium, wherein the readable storage medium stores a program or instructions, and when the program or the instructions are executed by a processor, steps of the data transmission method according to any one of claims 1 to 9 are implemented, or steps of the data transmission method according to any one of claims 10 to 21 are implemented, or steps of the data transmission method according to any one of claims 22 to 31 are implemented.

42. A chip, comprising a processor and a communication interface, wherein the communication interface is coupled with the processor, and the processor is configured to run a program or instructions to implement steps of the data transmission method according to any one of claims 1 to 9, or steps of the data transmission method according to any one of claims 10 to 21, or steps of the data transmission method according to any one of claims 22 to 31.

43. A computer program product, wherein the computer program product is stored in a non-transitory readable storage medium, and the computer program product is executed by at least one processor to implement steps of the data transmission method according to any one of claims 1 to 9, or steps of the data transmission method according to any one of claims 10 to 21, or steps of the data transmission method according to any one of claims 22 to 31.

44. A communication device, configured to perform steps of the data transmission method according to any one of claims 1 to 9, or steps of the data transmission method according to any one of claims 10 to 21, or steps of the data transmission method according to any one of claims 22 to 31.
